# EUROPEAN PATENT APPLICATION

(11) **EP 4 432 437 A1**
(43) Date of publication of application: **18.09.2024**
(21) Application number: 24151237.5
(22) Date of filing: 10.01.2024
(51) Int. Cl.: H01M 50/209, H01M 50/242, H01M 50/249, H01M 50/251, H01M 50/507, H01M 10/42

(54) **BATTERY PACK**

(30) Priority: 13.03.2023 KR 20230032570
(71) Applicant: Samsung SDI Co., Ltd., Yongin-si, Gyeonggi-do 17084 (KR)
(72) Inventor: KIM, Gang Yul, 16678 Suwon-si (KR)
(74) Representative: Marks & Clerk LLP

(57) **Abstract**

The battery pack includes: a tray; a plurality of unit modules spaced apart from each other on the tray and each including a battery cell; a first support member supporting the plurality of unit modules with respect to the tray in a first direction; and a second support member supporting the plurality of unit modules with respect to the tray in a second direction different from the first direction.

## Description

### Field of the Invention

The present disclosure relates to a battery pack.

### Description of the Related Art

In general, with rapid increase in demand for portable electronics, such as notebook computers, video cameras, and portable phones, and commercialization of robots and electric vehicles, various studies have been actively carried out to develop high performance secondary batteries that allow repeated charge and discharge.

Secondary batteries are widely used for power generation or energy storage not only in small devices, such as portable electronics, but also in medium/large devices, such as electric vehicles and energy storage systems (ESSs). In particular, in medium/large devices, multiple secondary cells are electrically connected to each other to form a battery module in order to enhance output and/or capacity of the battery. Such battery modules may be connected to each other to form a single battery pack.

In recent years, cell-to-pack (CTP) technology, in which such secondary cells are stacked together with insulators to form unit modules, which in turn are mounted in a housing structure and electrically connected to each other to form a battery pack, is attracting attention.

Conventionally, a busbar is welded to electrode tabs of the unit module in order to electrically connect such unit modules to each other. In this case, a height difference between the unit modules can cause failure in welding between the busbar and the electrode tabs or detachment therebetween after welding.

Battery packs are subjected to performance evaluation, such as vibration evaluation and the like, after manufacturing. However, although a typical battery pack can secure durability for horizontal vibration through the housing structure, which surrounds the unit modules, the typical battery pack is vulnerable to vertical vibration due to lack of a structure that can support the unit modules in the vertical direction.

The background technique of the present disclosure is disclosed in Japanese Patent Registration No. 5853417 (Registration Date: December 18, 2015, Title of the invention: Battery pack structure of electric automobiles).

### Summary of the Invention

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various embodiments are directed to a battery pack capable of stably supporting battery cells while reducing deviation in height between the battery cells.

In embodiments, a battery pack includes: a tray; a plurality of unit modules spaced apart from each other on the tray and each including a battery cell; a first support member supporting the plurality of unit modules with respect to the tray in a first direction; and a second support member supporting the plurality of unit modules with respect to the tray in a second direction different from the first direction.

The first support member may include: a first case disposed between adjacent unit modules; and a second case disposed to intersect the first case and facing ends of the unit modules.

Each of the unit modules may include a plurality of battery cells linearly arranged in a longitudinal direction of the first case.

The second support member may include: a second support body disposed between the adjacent unit modules; and a pressing member extending from the second support body and pressing the adjacent unit modules towards the tray.

The second support body may be disposed parallel to the first case in longitudinal directions thereof and may be seated on the first case and the second case.

The second support member may further include a securing member securing the second support body to the first case and the second case.

The securing member may include: an alignment member extending from the second support body and inserted into at least one of the first case and the second case; and a fastening member fastened to at least one of the first case and the second case through the second support body.

The pressing member may include: a first flange extending from one side of the second support body and facing one of adjacent unit modules; a second flange extending from the other side of the second support body and facing the other unit module of the adjacent unit modules; a first pressing member secured to the first flange and pressing the battery cell disposed in one of the adjacent unit modules; and a second pressing member secured to the second flange and pressing the battery cell disposed in the other unit module of the adjacent unit modules.

The first pressing member and the second pressing member may be elastically deformable.

The second support member may further include a reinforcing member reinforcing the second support body.

The reinforcing member may include a plurality of reinforcing ribs disposed inside the second support body and spaced apart from each other in a longitudinal direction of the second support body.

The battery pack may further include: a third support member disposed on the tray and supporting a wiring harness.

The third support member may include: a clip holder secured to the second support body; and a clip supported by the clip holder and separating the wiring harness from the second support body by a predetermined distance.

The battery pack may further include: a connection member electrically connected to the plurality of unit modules; and a controller disposed on the tray to be connected to the connection member and controlling operation of the plurality of unit modules.

The connection member may include: a first busbar electrically connected to the battery cell; a second busbar electrically connecting adjacent unit modules to each other; and a third busbar electrically connecting the plurality of unit modules to the controller.

At least some of the above and other features of the invention are set out in the claims.

In the battery pack according to the present disclosure, the first support member and the second support member may support the unit modules in a direction parallel to the tray and in a direction perpendicular to the tray, respectively, thereby improving durability with respect to vibration both in the horizontal direction and in the vertical direction.

The battery pack according to the present disclosure may maintain the height of the battery cells to be constant through the pressing member pressing the unit modules towards the tray, thereby improving connection quality between the battery cells.

In the battery pack according to the present disclosure, the first pressing member and the second pressing member contact a portion of the upper surface of the battery cell to prevent interference with the connection member, thereby further improving convenience in installation of the connection member.

In the battery pack according to the present disclosure, the first pressing member and the second pressing member may be elastically deformable to secure a sufficient contact area with the battery cells regardless of the shape of the battery cells while maintaining a contact state with respect to all of the plurality of battery cells sequentially arranged.

The battery pack according to the present disclosure can prevent damage to the wiring harness supported by the third support member on the unit modules due to interference with adjacent components and can prevent tangling between multiple wiring harnesses.

### Brief Description of the Drawings

FIG. 1 is a perspective view of a battery pack according to an embodiment of the present disclosure.
FIG. 2 is an exploded perspective view of the battery pack according to the embodiment of the present disclosure.
FIG. 3 is a plan view of the battery pack according to the embodiment of the present disclosure.
FIG. 4 is an enlarged view of a unit module according to the embodiment of the present disclosure.
FIG. 5 is a perspective view of a first support member according to the embodiment of the present disclosure.
FIG. 6 is a plan view of the first support member according to the embodiment of the present disclosure.
FIG. 7 is a perspective view of a second support member according to the embodiment of the present disclosure.
FIG. 8 is a bottom perspective view of the second support member according to the embodiment of the present disclosure.
FIG. 9 is a front view of the second support member according to the embodiment of the present disclosure.
FIG. 10 is a plan view of the second support member according to the embodiment of the present disclosure.
FIG. 11 is a perspective view of the second support member according to the embodiment of the present disclosure in an installed state.
FIG. 12 is a front view of the second support member according to the embodiment of the present disclosure in an installed state.
FIG. 13 to FIG. 15 are schematic views illustrating a process of assembling the second support member according to the embodiment of the present disclosure.
FIG. 16 is a perspective view of a third support member according to the embodiment of the present disclosure.
FIG. 17 is a plan view of the third support member according to the embodiment of the present disclosure.

### Detailed Description of the Invention

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Hereinafter, embodiments of the present disclosure will be described in detail with reference to the accompanying drawings.

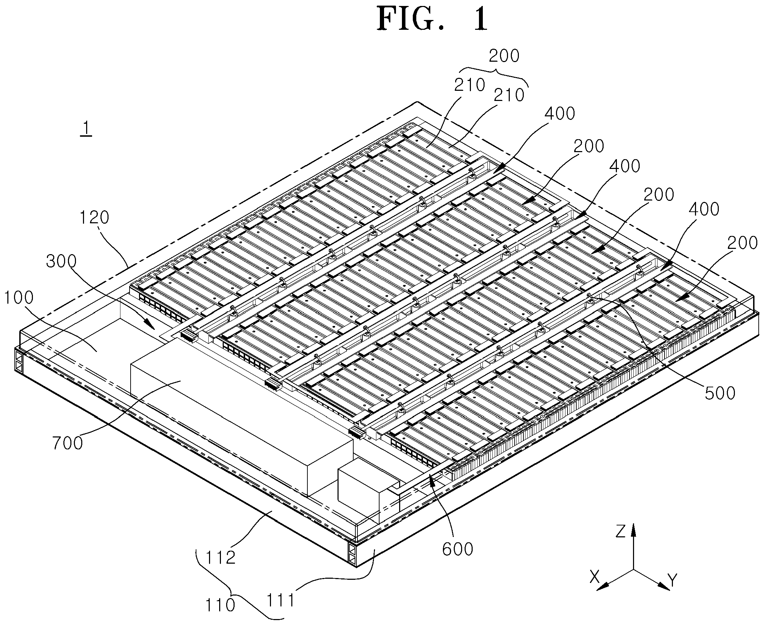

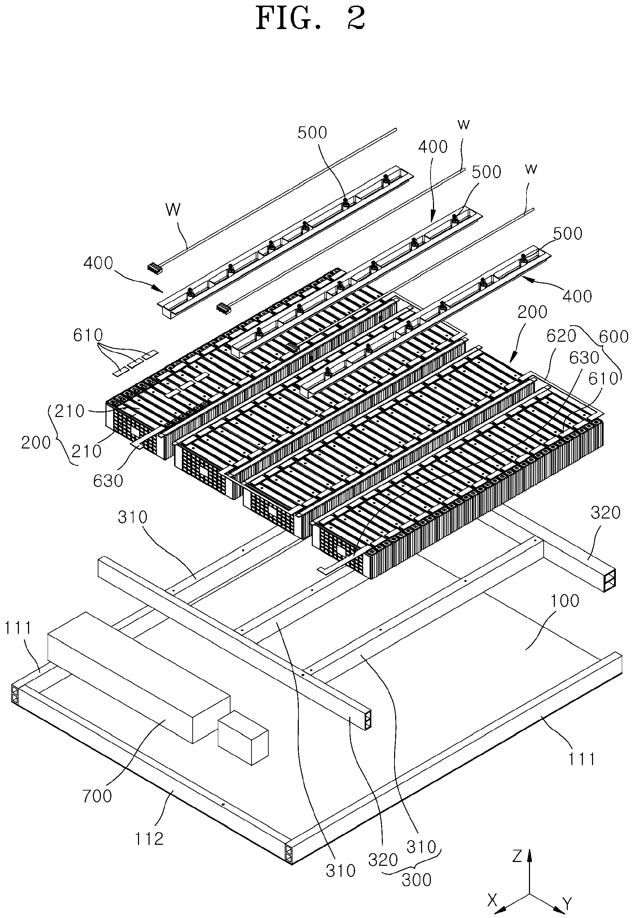

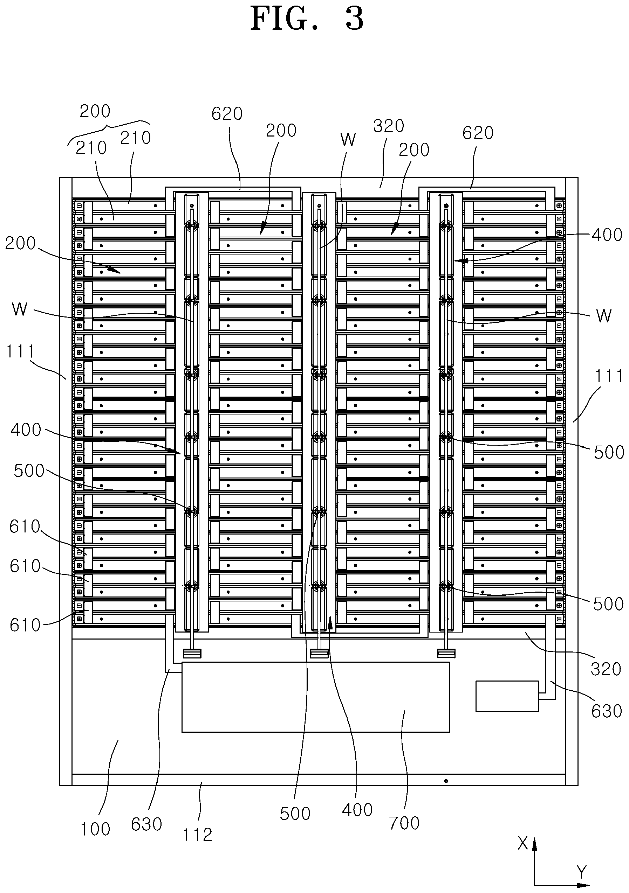

FIG. 1 is a perspective view of a battery pack according to an embodiment of the present disclosure, FIG. 2 is an exploded perspective view of the battery pack according to the embodiment of the present disclosure, and FIG. 3 is a plan view of the battery pack according to the embodiment of the present disclosure.

Referring to FIG. 1 to FIG. 3, the battery pack 1 includes a tray 100, a unit module 200, a first support member 300, and a second support member 400.

The tray 100 defines an external appearance of a lower side of the battery pack 1 and supports the unit modules 200, the first support member 300, the second support member 400, and the like, described below.

The tray 100 may have a substantially planar plate shape. Referring to FIG. 1, the tray 100 may be disposed parallel to an X-Y plane. The tray 100 may be formed of a material having high rigidity, such as metal and the like, to prevent damage, deformation and the like due to load applied from the unit module 200, the first support member 300, the second support member 400, and the like. The tray 100 may have a rectangular shape, as shown in FIG. 2, without being limited thereto. Alternatively, the tray 100 may be modified into various shapes including a polygonal shape, a circular shape, and the like.

The tray 100 may be provided with an outer case 110 defining a lateral outer appearance of the battery pack 1. The outer case 110 acts as a component preventing the unit modules 200, the first support member 300, the second support member 400 and the like disposed on the tray 100 from being separated from the tray 100. The outer case 110 may be disposed along an edge of the tray 100 on the tray 100 to define a space capable of accommodating the unit module 200, the first support member 300, the second support member 400, and the like.

The outer case 110 may include a first outer case 111 and a second outer case 112.

The first outer case 111 may be formed in a substantially beam or column shape and may be disposed on an upper surface of the tray 100. The first outer case 111 may be disposed in a longitudinal direction of the tray 100, that is, in a direction parallel to the X-axis with reference to FIG. 1. A lower surface of the first outer case 111 is seated on the upper surface of the tray 100. The first outer case 111 may be integrally coupled to the tray 100 by various coupling methods, such as bolting, bonding, welding, fitting, latching, and the like. The first outer case 111 may be formed of a material having high rigidity, such as metal and the like, to prevent damage, deformation and the like due to external impact and the like. The height of the first outer case 111 may be changed in various ways depending upon the height of the unit modules 200 and the like.

The first outer case 111 may be realized as a pair of first outer cases 111. The pair of first outer cases 111 may be parallel to each other. The pair of first outer cases 111 may be spaced apart from each other in the width direction of the tray 100, that is, in the Y-axis direction with reference to FIG. 1. The pair of first outer cases 111 may be disposed at opposite end edges of the tray 100 in the width direction thereof, respectively.

The second outer case 112 may be formed in a substantially beam or column shape and may be disposed on the upper surface of the tray 100. The second outer case 112 may be disposed to intersect the first outer case 111. For example, the second outer case 112 may be disposed to have a length parallel to the width of the tray 100, that is, in the Y-axis direction with reference to FIG. 1. The second outer case 112 may be disposed at one end edge (left-side end edge in FIG. 1) of the tray 100 in the longitudinal direction thereof. The second outer case 112 may be disposed to have opposite ends facing inner surfaces of the pair of first outer cases 111. The opposite ends of the second outer case 112 may be integrally coupled to the first outer case 111 by various coupling methods, such as bolting, bonding, welding, fitting, latching, and the like.

A lower surface of the second outer case 112 may be seated on the upper surface of the tray 100. The second outer case 112 may be integrally coupled to the tray 100 by various coupling methods, such as bolting, bonding, welding, and the like. The second outer case 112 may be formed of a material with high rigidity, such as metal and the like, to prevent damage, deformation and the like due to external impact and the like. The second outer case 112 may have a height corresponding to the height of the first outer case 111.

Although FIG. 1 to FIG. 3 show a single second outer case 112, it should be understood that the number of second outer cases 112 is not limited thereto and the second outer case 112 may be modified in various ways. For example, the second outer case 112 may be realized as a pair of second outer cases 112 depending upon the location of the unit modules 200 and the like to be disposed at the opposite end edges of the tray 100 in the longitudinal direction of the tray 100.

A cover 120 may be disposed on an upper side of the outer case 110 to form an upper external appearance of the battery pack 1. The cover 120 covers an upper space of the tray 100 surrounded by the outer case 110 to prevent foreign matter from entering the unit modules 200, the first support member 300 and the second support member 400 on the tray 100.

The cover 120 may be formed in a box shape having an empty space and open at a lower side thereof. A lower surface of the cover 120 may be seated on the upper side of the outer case 110. The cover 120 may be integrally coupled to the outer case 110 by bolting, bonding, welding, or the like, or may be detachably coupled to the outer case 110 by fitting, latching or the like.

The unit module 200 is disposed on the tray 100 and stores or supplies electric power through charge and discharge operation. The unit module 200 may be provided in plural. The plural unit modules 200 may be spaced apart from each other on the tray 100. For example, the plurality of unit modules 200 may be spaced apart from each other on the tray 100 in the width direction of the tray 100, that is, in a direction parallel to the Y-axis with reference to FIG. 1. Although FIG. 1 to FIG. 3 show four unit modules 200 by way of example, it should be understood that the number of unit modules 200 is not limited thereto and the battery pack may be provided with various numbers of unit modules 200.

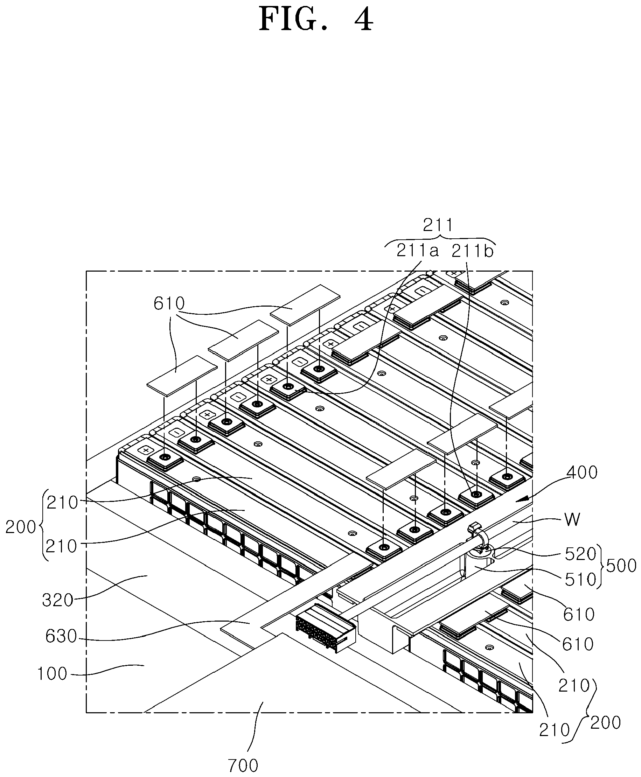

FIG. 4 is an enlarged view of a unit module according to the embodiment of the present disclosure.

The unit module 200 includes a battery cell 210.

Although not shown in the drawings, the battery cell 210 may be exemplified as various types of secondary cells (not shown), which are provided therein with an electrode assembly (not shown) having a cathode plate (not shown) and an anode plate (not shown) at both sides of a separator (not shown) interposed therebetween, and can be charged or discharged with a preset quantity of electricity.

The battery cell 210 may be formed in a substantially parallelepiped box shape. The battery cell 210 may be formed to have a width greater than a length of the battery cell 210. The battery cell 210 may be disposed parallel to the tray 100 in the width directions thereof, that is, to the Y-axis with reference to FIG. 1.

The battery cell 210 may be provided in plural. The plurality of battery cells 210 may be linearly arranged in the longitudinal direction of the tray 100, that is, in the direction parallel to the X-axis with reference to FIG. 1. Each of the unit modules 200 may include the same number of battery cells 210 or may include different numbers of battery cells. It should be understood that the number of battery cells 210 is not limited to that shown in FIG. 1 to FIG. 3 and the unit module may include a various number of battery cells 210.

Although the battery cell 210 constituting each of the unit modules 200 is provided in plural in the following description, it should be understood that the present disclosure is not limited thereto and each of the unit modules 200 may include a single battery cell 210.

The battery cell 210 may be formed with a connection terminal 211 protruding upwards from an upper surface of the battery cell 210.

The connection terminal 211 may include a first connection terminal 211a connected to a cathode (positive electrode) of the battery cell 210 and a second connection terminal 211b connected to an anode (negative electrode) of the battery cell 210. The first connection terminal 211a and the second connection terminal 211b may be separated a predetermined distance from each other in the width direction of the battery cell 210, that is, in the direction parallel to the Y-axis in FIG. 1. A distance between the first connection terminal 211a and the second connection terminal 211b may be smaller than the width of the battery cell 210. The first connection terminal 211a and the second connection terminal 211b may be placed at locations separated a predetermined distance from opposite ends of the battery cell 210 in the width direction thereof, respectively. Thus, the first connection terminal 211a and the second connection terminal 211b may provide a space in which the second support member 400 contacts the battery cell 210.

The plurality of battery cells 210 arranged in one of the unit modules 200 in the X-axis direction may be disposed such that the first connection terminals 211a and the second connection terminals 211b alternate with each other in the longitudinal direction of the tray 100. That is, in FIG. 4, the first connection terminal 211a and the second connection terminal 211b formed in one of a pair of battery cells 210 adjacent each other in the X-axis direction may be disposed at the left and right sides with reference to the Y-axis direction, respectively, and the first connection terminal 211a and the second connection terminal 211b formed in the other battery cell 210 may be disposed at the right and left sides with reference to the Y-axis direction, respectively.

The first support member 300 supports the plurality of unit modules 200 with respect to the tray 100 in a first direction. Here, the first direction may be exemplified as any direction parallel to the X-Y plane with reference to FIG. 1 to FIG. 3. That is, the first support member 300 supports the plurality of unit modules 200 on the tray 100 in the direction parallel to the tray 100. With this structure, the first support member 300 can suppress vibration of the plurality of unit modules 200 in the direction parallel to the tray 100 due to external force applied from outside.

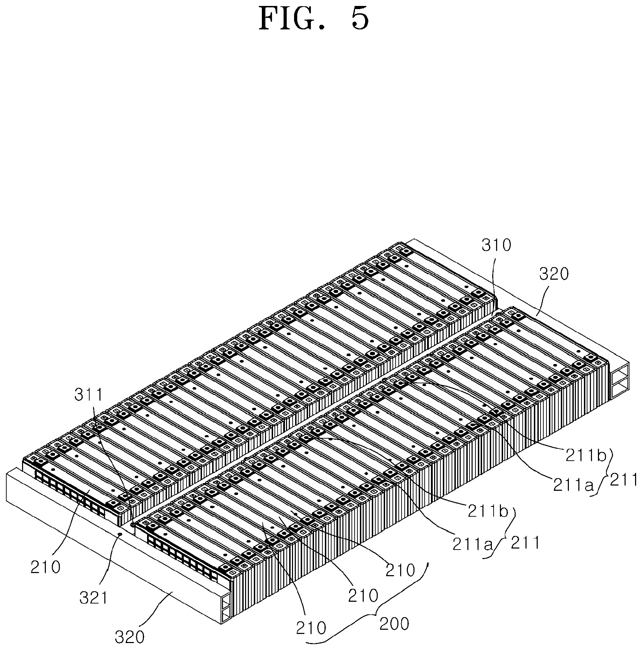

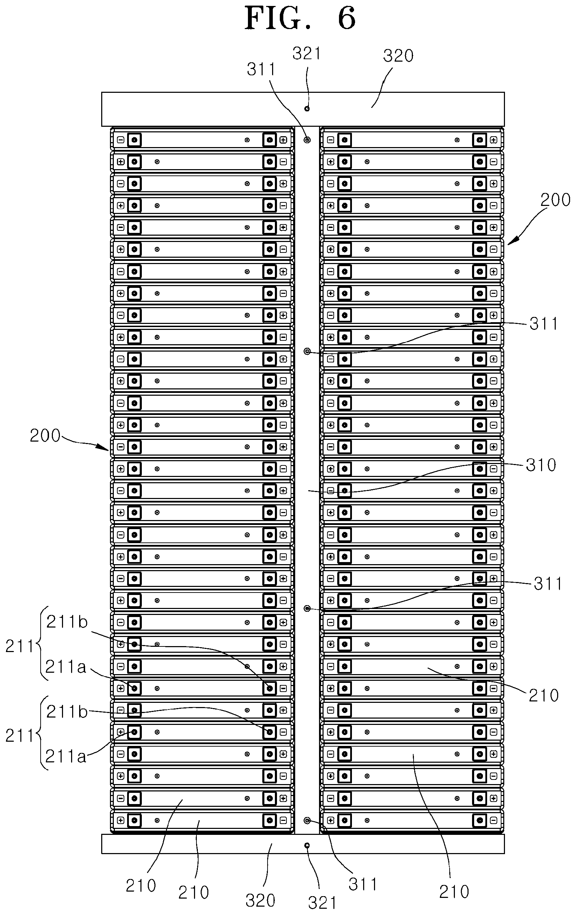

FIG. 5 is a perspective view of a first support member according to the embodiment of the present disclosure and FIG. 6 is a plan view of the first support member according to the embodiment of the present disclosure.

Referring to FIG. 5 and FIG. 6, the first support member 300 may include a first case 310 and a second case 320.

The first case 310 is disposed between adjacent unit modules 200. The first case 310 acts as a component supporting the unit modules 200 in the width direction of the tray 100 that is, in the direction parallel to the Y-axis with reference to FIG. 1.

The first case 310 may be formed in a substantially beam or column shape. As adjacent unit modules 200 are spaced apart from each other in the width direction of the tray 100, the first case 310 may be disposed in a space defined between the adjacent unit modules 200. The first case 310 may be disposed parallel to an arrangement direction of the plurality of battery cells 210 in one unit module 200, that is, to the longitudinal direction of the tray 100. Opposite side surfaces of the first case 310 may contact side surfaces of the battery cells 210 provided to adjacent unit modules 200. The first case 310 may have a lower height than the unit modules 200.

A lower surface of the first case 310 is seated on the upper surface of the tray 100. The first case 310 may be integrally coupled to the tray 100 by various coupling methods, such as bolting, bonding, welding, fitting, latching, and the like. The first case 310 may be formed of a material having high rigidity, such as metal and the like, to prevent damage, deformation and the like due to external impact and the like.

The first case 310 may be provided in plural. The plural first cases 310 may be individually disposed in spaces between adjacent unit modules 200. The number of first cases 310 may be determined in various ways depending upon the number of unit modules 200.

The second case 320 may be disposed to intersect the first case 310 while facing ends of the unit modules 200. The second case 320 may act as a component supporting the unit modules 200 in the longitudinal direction of the tray 100, that is, in the direction parallel to the X-direction with reference to FIG. 1.

The second case 320 may be formed in a substantially beam or column shape. The second case 320 may be disposed perpendicular to the first case 310 in the longitudinal direction thereof. The second case 320 may be disposed to face the battery cells 210 placed at a distal end of the tray 100 among the plurality of battery cells 210 arranged in the longitudinal direction of the tray 100. The second case 320 may have an inner surface contacting side surfaces of the battery cells 210 perpendicular to the X-axis. The second case 320 may simultaneously contact a plurality of battery cells 210 placed at a distal end of each of the plurality of unit modules 200. The second case 320 may have a lower height than the unit modules 200.

A lower surface of the second case 320 is seated on the upper surface of the tray 100. The second case 320 may be integrally coupled to the tray 100 by various coupling methods, such as bolting, bonding, welding, fitting, latching, and the like. The second case 320 may be formed of a material having high rigidity, such as metal and the like, to prevent damage, deformation and the like due to external impact and the like.

The second case 320 may be provided in plural. By way of example, the second case 320 may be realized as a pair of outer cases 320. The pair of second cases 320 may be disposed to face the battery cells 210 disposed at opposite ends of the unit modules 200, respectively. Among the pair of second cases 320, one second case 320 may be placed at the other end of the tray in the longitudinal direction thereof at which the second outer case 112 is not disposed. The second case 320 may support the unit modules 200 in the X-axis direction while performing the function of the second outer case 112.

The second support member 400 supports the plurality of unit modules 200 with respect to the tray 100 in a second direction different from the first direction. Here, the second direction may be exemplified as a direction parallel to the Z-axis with reference to FIG. 1 to FIG. 3. That is, the second support member 400 may act as a component supporting the plurality of unit modules 200 on the tray 100 in a direction perpendicular to the tray 100. With this structure, the second support member 400 can suppress vibration of the plurality of unit modules 200 in the direction perpendicular to the tray 100 due to external force applied from outside. The second support member 400 may maintain the plurality of battery cells 210 to have a constant height to improve connection performance of the battery cells 210.

The second support member 400 may be provided in plural. Each of the second support members 400 may individually support the pair of unit modules 200 adjacent each other among the plurality of unit modules 200.

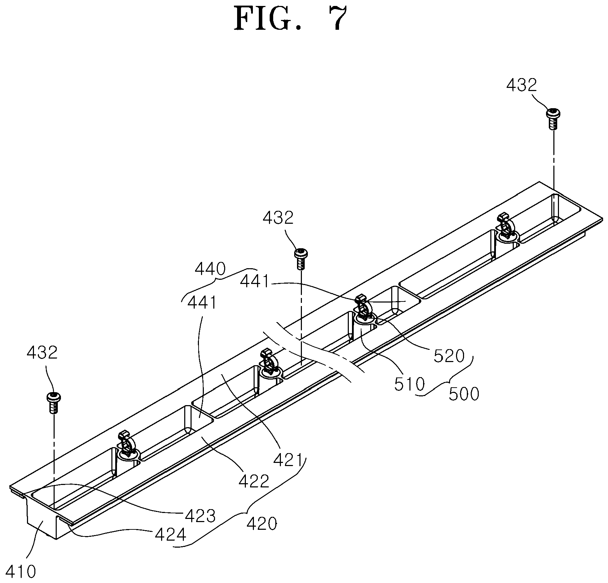

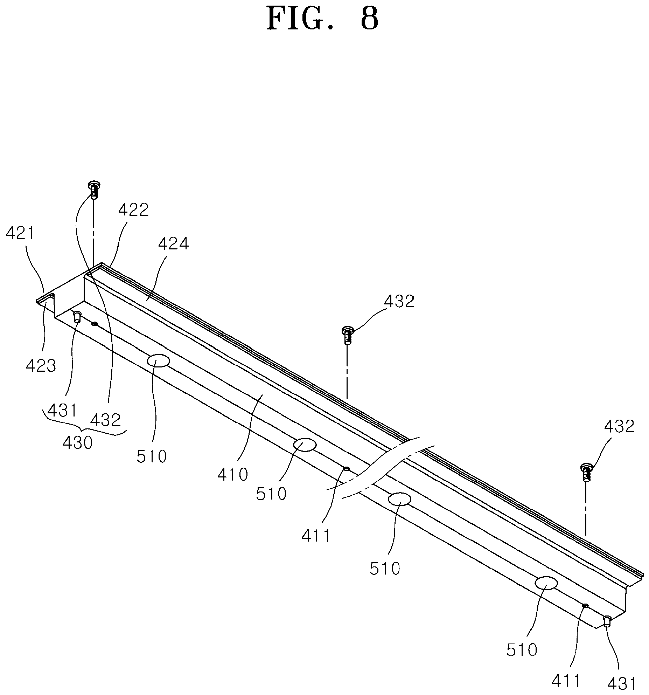

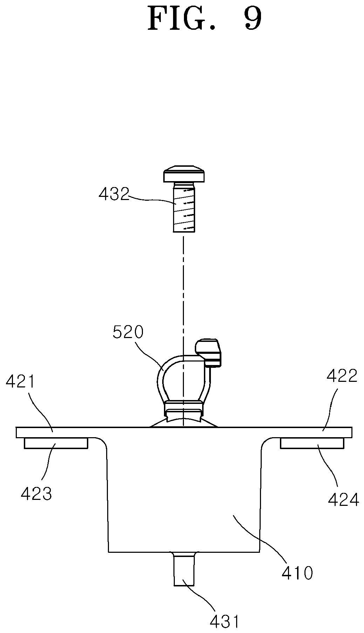

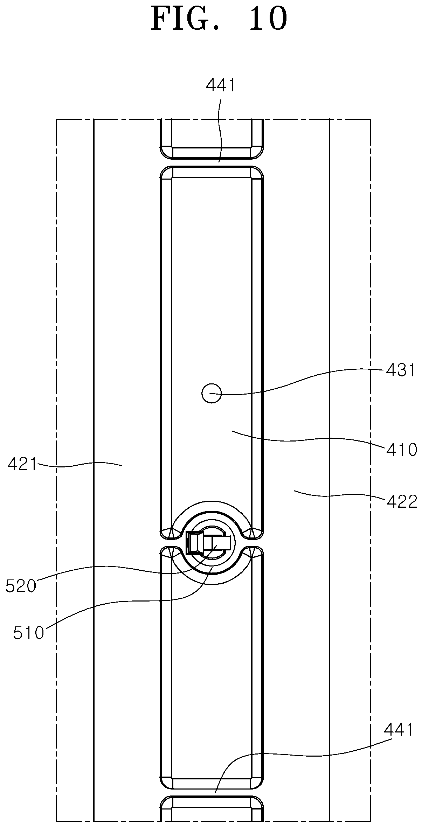

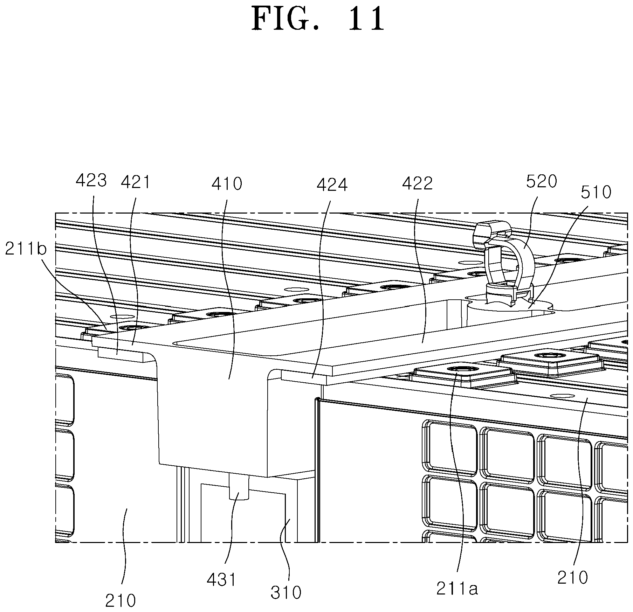

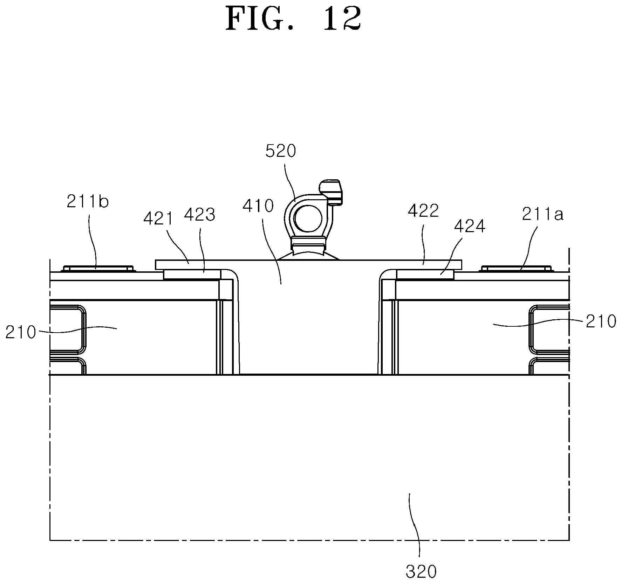

FIG. 7 is a perspective view of a second support member according to the embodiment of the present disclosure, FIG. 8 is a bottom perspective view of the second support member according to the embodiment of the present disclosure, FIG. 9 is a front view of the second support member according to the embodiment of the present disclosure, FIG. 10 is a plan view of the second support member according to the embodiment of the present disclosure, FIG. 11 is a perspective view of the second support member according to the embodiment of the present disclosure in an installed state and FIG. 12 is a front view of the second support member according to the embodiment in an installed state.

Referring to FIG. 7 to FIG. 12, the second support member 400 may include a second support body 410 and a pressing member 420.

The second support body 410 is disposed between adjacent unit modules 200 and supports the pressing member 420 described below. The second support body 410 of each of the second support members 400 may be individually disposed between the adjacent unit modules 200.

The second support body 410 may be formed in a box shape having an empty space and open at an upper side thereof. The second support body 410 may be disposed parallel to the first case 310 in the longitudinal directions thereof. A lower surface of the second support body 410 may be seated on an upper surface of the first case 310. The second support body 410 may have a greater length than the first case 310. The lower surface of the second support body 410 may be seated at opposite ends thereof on the upper surfaces of the pair of second cases 320. The second support body 410 may be disposed such that the opposite side surfaces of the second support body 410 perpendicular to the Y-axis direction face side surfaces of the pair of unit modules 200 adjacent each other.

The pressing member 420 extends from the second support body 410 and presses the adjacent unit modules 200 towards the tray 100. That is, the pressing member 420 may act as a component suppressing upward/downward vibration of the battery cell 210 while aligning the battery cells 210 to have a constant height by imparting compressive force to the adjacent unit modules 200 in the direction perpendicular to the tray 100.

The pressing member 420 may include a first flange 421, a second flange 422, a first pressing member 423, and a second pressing member 424.

The first flange 421 extends from one side of the second support body 410 and is disposed to face one of the adjacent unit modules 200.

The first flange 421 may be formed in a plate shape horizontally extending from an upper end of the second support body 410 towards one side of the tray 100 (the left side in FIG. 9) in the width direction thereof. A lower surface of the first flange 421 faces the upper surfaces of the plurality of battery cells 210 constituting the unit module 200 disposed at one side of the second support body 410 (at the left side in FIG. 12). The lower surface of the first flange 421 is spaced apart from the upper surfaces of the battery cells 210 by a predetermined distance. The first flange 421 may be formed of a material having high rigidity, such as metal and the like, to prevent deformation due to compressive force generated between the first pressing member 423 and the battery cell 210 described below.

The second flange 422 extends from the other side of the second support body 410 and is disposed to face the other unit module 200 among the adjacent unit modules 200.

The second flange 422 may be formed in a plate shape horizontally extending from the upper end of the second support body 410 towards the other side of the tray 100 (the right side in FIG. 9) in the width direction thereof, that is, in an opposite direction to the first flange 421. A lower surface of the second flange 422 faces the upper surfaces of the plurality of battery cells 210 constituting the unit module 200 disposed at the other side of the second support body 410 (at the right side in FIG. 12). The lower surface of the second flange 422 is spaced apart from the upper surfaces of the battery cells 210 by a predetermined distance. The second flange 422 may be formed of a material having high rigidity, such as metal and the like, to prevent deformation due to compressive force generated between the second pressing member 424 and the battery cell 210 described below.

The first pressing member 423 is secured to the first flange 421 and presses the battery cells 210 disposed in one of the adjacent unit modules 200 towards the tray 100.

The first pressing member 423 may be formed in a substantially pad shape. The first pressing member 423 may have an upper surface integrally secured to the lower surface of the first flange 421.

As the second support body 410 is seated on the first case 310 and the second case 320, the lower surface of the first pressing member 423 may contact the upper surfaces of the plurality of battery cells 210 constituting the unit module 200 placed at one side of the second support body 410 (at the left side in FIG. 12) and may press the battery cells 210 in the downward direction.

The second pressing member 424 is secured to the second flange 422 and presses the battery cells 210 disposed in the other unit module 200 among the adjacent unit modules 200 towards the tray 100.

The second pressing member 424 may be formed in a substantially pad shape. The second pressing member 424 may have an upper surface integrally secured to the lower surface of the second flange 422.

As the second support body 410 is seated on the first case 310 and the second case 320, the lower surface of the second pressing member 424 may contact the upper surfaces of the plurality of battery cells 210 constituting the unit module 200 placed at the other side of the second support body 410 (at the right side in FIG. 12) and may press the battery cells 210 in the downward direction.

The first pressing member 423 and the second pressing member 424 may be spaced apart from the connection terminals 211 protruding from the upper surfaces of the battery cell 210 and may contact part of the upper surfaces of the battery cells 210. For example, the first pressing member 423 and the second pressing member 424 may contact edge regions on the upper surfaces of the battery cells 210 placed outside the first connection terminal 211a and the second connection terminal 211b among the entire region of the upper surfaces of the battery cells 210. The first pressing member 423 and the second pressing member 424 can prevent interference with an electrical connection structure of the battery cells 210.

The first pressing member 423 and the second pressing member 424 may be elastically deformable. For example, the first pressing member 423 and the second pressing member 424 may be formed of an elastic material, such as porous rubber, silicone, and the like. Regardless of the shape of the battery cells 210, the first pressing member 423 and the second pressing member 424 can secure a sufficient contact area with the battery cells 210 and can maintain a contact state with respect to all of the battery cells 210 linearly arranged in the longitudinal direction of the tray 100.

The second support member 400 may further include a securing member 430.

The securing member 430 secures the second support body 410 to the first case 310 and the second case 320. The securing member 430 can prevent detachment of the second support body 410 on the first case 310 and the second case 320 while maintaining a pressing state of the pressing member 420 with respect to the battery cells 210.

The securing member 430 may include an alignment member 431 and a fastening member 432.

The alignment member 431 may extend from the second support body 410. In the course of seating the second support body 410 on the first case 310 and the second case 320, the alignment member 431 may be inserted into at least one of the first case 310 and the second case 320 and aligns the second support body 410 at a proper location. As a result, the alignment member 431 can improve efficiency and convenience in assembly of the second support member 400 with respect to the first support member 300.

Hereinafter, although the alignment member 431 will be illustrated by way of example as being inserted into the second case 320, it should be understood that the present disclosure is not limited thereto and the alignment member 431 may be inserted into the first case 310 or into both the first case 310 and the second case 320.

The alignment member 431 may be formed in a bar shape vertically extending downwards from the second support body 410. As the second support body 410 is seated on the first case 310 and the second case 320, the alignment member 431 may be inserted into the second case 320 through an alignment hole 321 vertically formed through the upper surface of the second case 320. As a result, the alignment member 431 may provide a reference point for seating locations of the second support body 410 on the first case 310 and the second case 320.

The alignment member 431 may be realized as a pair of alignment members. The pair of alignment members 431 may be individually inserted into the respective second cases 320. As a result, the pair of alignment members 431 may align the second support body 410 with the first case 310.

The fastening member 432 may be fastened to at least one of the first case 310 and the second case 320 through the second support body 410 to allow the second support body 410 to be integrally coupled to the first case 310 and the second case 320. The fastening member 432 may be provided in plural. The plural fastening members 432 may be spaced apart from each other in a longitudinal direction of the second support body 410.

Hereinafter, although the fastening member 432 will be illustrated by way of example as being fastened to the first case 310, it should be understood that the present disclosure is not limited thereto and the fastening member 432 may be fastened to the second case 320 or to both the first case 310 and the second case 320.

The fastening member 432 may have a screw shape with threads formed on an outer circumferential surface thereof. After the second support body 410 is seated on the first case 310 and the second case 320, the fastening member 432 sequentially passes through a first fastening hole 411 formed on a bottom surface of the second support body 410 and a second fastening hole 311 formed on the upper surface of the first case 310. The outer circumferential surface of the fastening member 432 may be screwed to an inner circumferential surface of the second fastening hole 311, whereby the second support body 410 can be integrally coupled to the first case 310.

Although the fastening member 432 has been illustrated as a screw by way of example, it should be understood that the present disclosure is not limited thereto and the fastening member 432 may be modified into various kinds of fastening means, such as rivets and the like, which can integrally couple the second support body 410 to the first case 310 and the second case 320.

The second support member 400 may further include a reinforcing member 440.

The reinforcing member 440 prevents the second support body 410 from being deformed or damaged due to external impact by reinforcing the second support body 410.

The reinforcing member 440 may include a plurality of reinforcing ribs 441 spaced apart from each other in the longitudinal direction of the second support body 410.

The reinforcing ribs 441 may be formed in a substantially plate shape and may be disposed inside the second support body 410. Each of the reinforcing ribs 441 may be coupled at opposite ends thereof to the inner surface of the second support body 410 perpendicular to the Y-axis in the width direction. The reinforcing ribs 441 may be formed of the same material as the second support body 410 or a material having higher rigidity than the second support body 410. The thickness of the reinforcing ribs, the number of reinforcing ribs 441, and the like may be set in various ways depending upon the material, size and the like of the second support body 410.

Hereinafter, a process of assembling the second support member 400 will be described in detail.

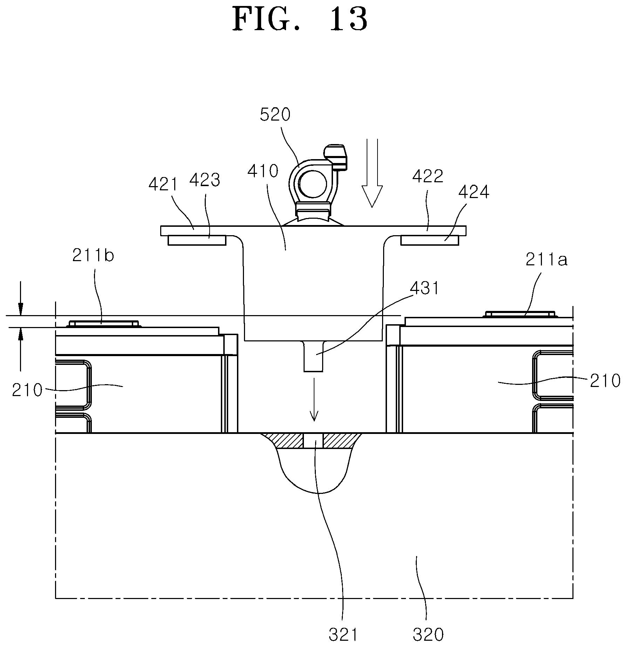

FIG. 13 to FIG. 15 are schematic views illustrating a process of assembling the second support member according to the embodiment of the present disclosure.

Referring to FIG. 13, with the unit modules 200 and the first support member 300 disposed on the tray 100, the second support body 410 is placed between adjacent unit modules 200.

As the second support body 410 is seated on the upper surfaces of the first case 310 and the second case 320, the alignment members 431 are inserted into the second case 320 through the alignment holes 321.

The second support body 410 is aligned in position relative to the first case 310 and the second case 320 and is temporarily assembled to the first case 310 and the second case 320.

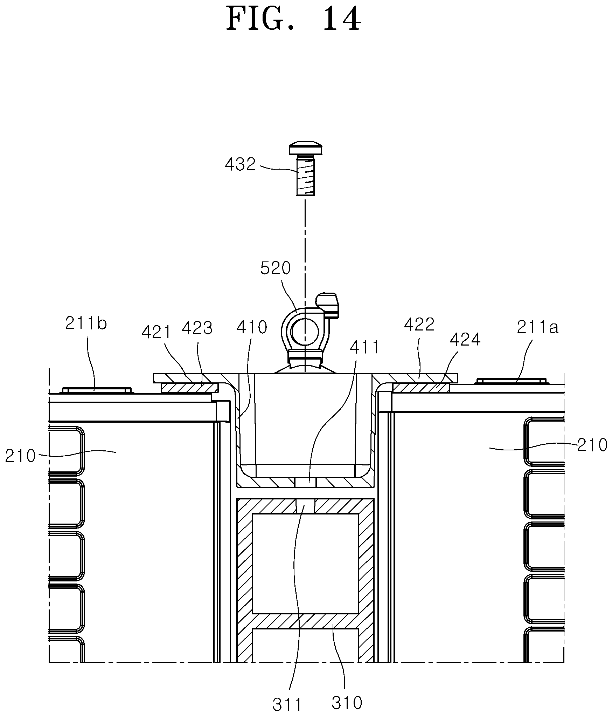

Referring to FIG. 14, after alignment of the second support body 410 in position, the fastening members 432 integrally couple the second support body 410 and the first case 310 to each other.

By way of example, the fastening members 432 may integrally couple the second support body 410 and the first case 310 to each other through screw coupling between the outer circumferential surface thereof and the inner circumferential surface of the second fastening hole 311 after passing through the bottom surface of the second support body 410 through the fastening hole 411.

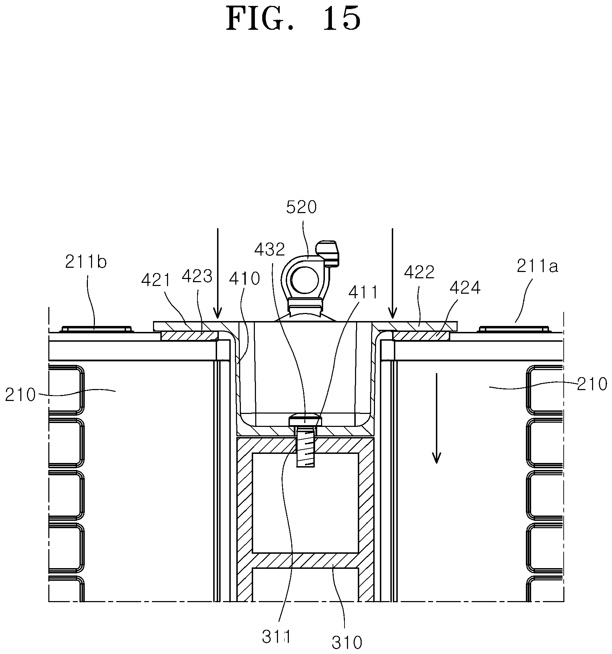

Referring to FIG. 15, the first pressing member 423 and the second pressing member 424 contact the upper surfaces of the battery cells 210 in the adjacent unit modules 200 with reference to the second support body 410 and downwardly press the battery cells 210 by fastening operation of the fastening members 432.

The first pressing member 423 and the second pressing member 424 downwardly shift the battery cells 210 placed at relatively high locations among the plurality of battery cells 210 and align the plurality of battery cells 210 at a constant height.

Then, the first pressing member 423 and the second pressing member 424 maintain a contact state with the battery cells 210 through inherent elastic deformation while supporting the battery cells 210 in the direction perpendicular to the tray 100.

The battery pack 1 may further include a third support member 500.

The third support member 500 is disposed on the tray 100 to support multiple wiring harnesses W, which mediate power transmission between the unit modules 200 and external electronics. As a result, the third support member 500 can prevent damage to wiring harnesses W due to interference with adjacent components and can prevent tangling between the plurality of wiring harnesses W.

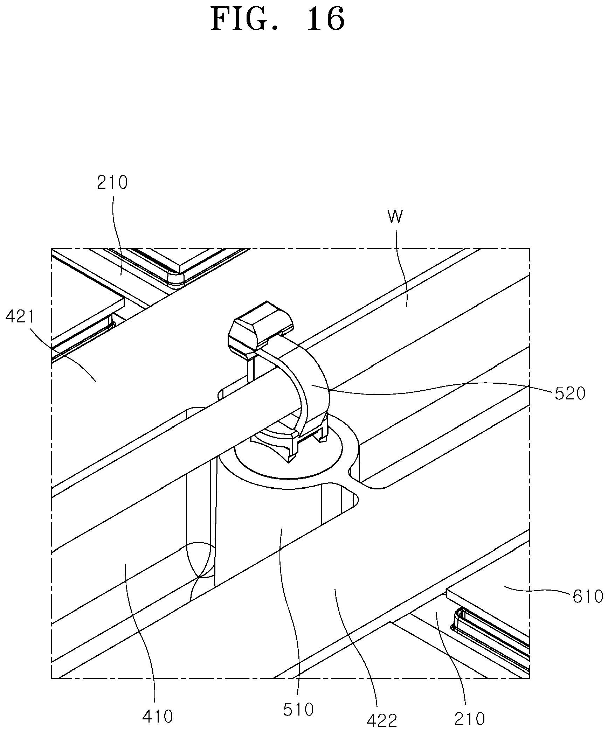

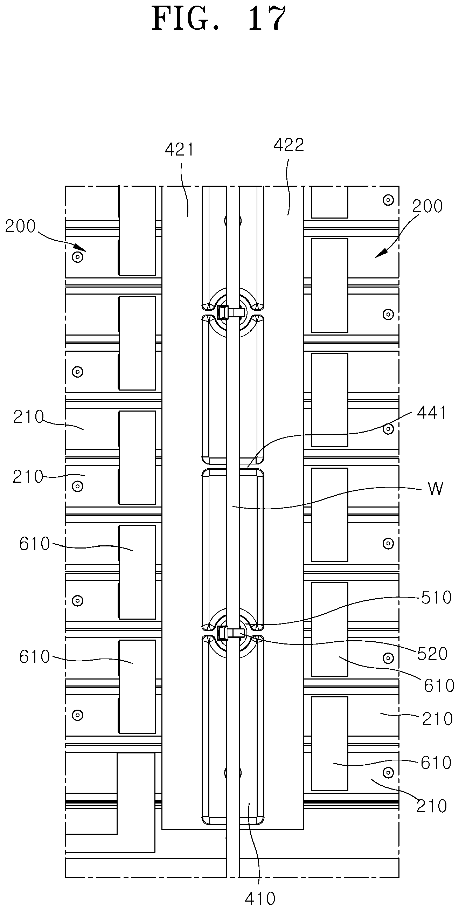

FIG. 16 is a perspective view of a third support member according to the embodiment of the present disclosure and FIG. 17 is a plan view of the third support member according to the embodiment of the present disclosure.

Referring to FIG. 16 and FIG. 17, the third support member 500 may include a clip holder 510 and a clip 520.

The clip holder 510 is secured to the second support body 410 and supports the clip 520 described below.

The clip holder 510 may have a hollow cylindrical shape open at an upper side thereof. The clip holder 510 may be disposed inside the second support body 410. The clip holder 510 may have an outer circumferential surface integrally secured to the inner surface of the second support body 410. The clip holder 510 may be provided in plural. The plural clip holders 510 may be spaced apart from each other in the longitudinal direction of the second support body 410. The number of clip holders 510, a distance therebetween, and the like may be modified in various ways depending upon the length of the second support body 410 and the like.

The clip 520 is supported by the clip holder 510 and separates the wiring harnesses W from the second support body 410 by a predetermined distance.

A lower end of the clip 520 may be inserted into the hollow space of the clip holder 510 and an upper end of the clip 520 may protrude from an upper surface of the second support body 410. The clip 520 may have a diameter-adjustable upper end and may be formed in a cable-tie shape such that an inner circumferential surface of the clip can hold an outer circumferential surface of the wiring harness W. However, it should be understood that the present disclosure is not limited thereto and the clip 520 may be modified into various kinds of securing means that can support the wiring harness W at a place separated a predetermined distance upwards from the second support body 410.

The third support member 500 is not limited to the structure that supports the wiring harness W above the second support body 410, as described above, and may be formed to support the wiring harness W inside the second support body 410.

The battery pack 1 may further include a connection member 600 and a controller 700.

The connection member 600 is electrically connected to the plurality of unit modules 200. That is, the connection member 600 acts as a component that electrically connects the unit modules 200 and the battery cells 210 disposed in the plurality of unit modules 200 to the controller 700.

Although the connection member 600 will be illustrated as electrically connecting the battery cells 210 in the plurality of unit modules 200 to each other in series, it should be understood that the present disclosure is not limited thereto and the connection member 600 may electrically connect some or all of the battery cells 210 in the plurality of unit modules 200 to each other in series or in parallel.

The connection member 600 may include a first busbar 610, a second busbar 620, and a third busbar 630.

The first busbar 610 is electrically connected to the battery cells 210 in one unit module 200. The first busbar 610 may include a conductive material and may be formed in a straight plate shape. The first busbar 610 may be connected at opposite ends thereof to the first connection terminal 211a of one of a pair of battery cells 210 adjacent each other in one unit module 200 and to the second connection terminal 211b of the other battery cell 210. The first busbar 610 may be provided in plural. Each of the first busbars 610 may be connected to the pair of battery cells 210 adjacent each other in one unit module 200. The first busbars 610 may electrically connect the plurality of battery cells 210 in one unit module 200 to each other in series.

The second busbar 620 electrically connects adjacent unit modules 200 to each other. The second busbar 620 may be formed of a conductive material and has an angled C shaped plate shape. The second busbar 620 may be connected at opposite ends thereof to the first connection terminal 211a of one of a pair of battery cells 210 placed at distal ends of adjacent unit modules 200 and to the second connection terminal 211b of the other battery cell 210. The second busbar 620 may be provided in plural. Each of the second busbars 620 may be individually connected to a pair of unit modules 200 adjacent each other. The second busbars 620 may electrically connect the plurality of unit modules 200 to each other in series.

The third busbar 630 electrically connects the plurality of unit modules 200 to the controller 700 described below. The third busbar 630 may be formed of a conductive material and may have a plate shape.

The third busbar 630 may be realized as a pair of third busbars. One of the pair of third busbars 630 may be connected at opposite ends thereof to the first connection terminal 211a of the unit module 200 disposed at one end among the plurality of unit modules 200 spaced apart from each other in the width direction of the tray 100 and to an anode (not shown) of the controller 700. The other third busbar 630 of the pair of third busbars 630 may be connected at opposite ends thereof to the second connection terminal 211b of the unit module 200 disposed at the other end among the plurality of unit modules 200 and to a cathode (not shown) of the controller 700. The third busbars 630 may electrically connect the plurality of unit modules 200 to the controller 700 in series.

The controller 700 is electrically connected to the connection members 600 and the wiring harnesses W and controls overall operation of the plurality of unit modules 200. The controller 700 may be disposed on the tray 100 and may be spaced apart from the unit modules 200. The controller 700 may monitor voltage, current and/or temperature of the plurality of unit modules 200 in real time and may include an electronic control device of a typical battery system, for example, a battery management system (BMS), a battery monitoring unit (BMU), a battery disconnect unit (BDU), or a battery junction box (BJB), which can actively control charge/discharge of the unit modules 200 based on the monitored data. Such an electronic control device may be realized by an integrated circuit (IC), a microcontroller (µC), a microprocessor, an application specific integrated circuit (ASIC), or a combination thereof.

Although the present disclosure has been described with reference to some example embodiments, it should be understood by those skilled in the art that these embodiments are given by way of illustration only, and that various modifications, variations and alterations can be made without departing from the scope of the invention.

Therefore, the scope of the present disclosure should be limited only by the accompanying claims and equivalents thereto.

## Claims

1. A battery pack comprising:
a tray;
a plurality of unit modules spaced apart from each other on the tray and each comprising a battery cell;
a first support member supporting the plurality of unit modules with respect to the tray in a first direction; and
a second support member supporting the plurality of unit modules with respect to the tray in a second direction different from the first direction.

2. The battery pack as claimed in claim 1, wherein the first support member comprises:
a first case disposed between adjacent unit modules; and
a second case disposed to intersect the first case and facing ends of the unit modules.

3. The battery pack as claimed in claim 2, wherein each of the unit modules comprises a plurality of battery cells linearly arranged in a longitudinal direction of the first case.

4. The battery pack as claimed in claim 2 or claim 3, wherein the second support member comprises:
a second support body disposed between the adjacent unit modules; and
a pressing member extending from the second support body and pressing the adjacent unit modules towards the tray.

5. The battery pack as claimed in claim 4, wherein the second support body is parallel to the first case in longitudinal directions thereof and is seated on the first case and the second case.

6. The battery pack as claimed in claim 5, wherein the second support member further comprises a securing member securing the second support body to the first case and the second case.

7. The battery pack as claimed in claim 6, wherein the securing member comprises:
an alignment member extending from the second support body and inserted into at least one of the first case and the second case; and
a fastening member fastened to at least one of the first case and the second case through the second support body.

8. The battery pack as claimed in any one of claims 4 to 7, wherein the pressing member comprises:
a first flange extending from one side of the second support body and facing one of adjacent unit modules;
a second flange extending from the other side of the second support body and facing the other unit module of the adjacent unit modules;
a first pressing member secured to the first flange and pressing the battery cell disposed in one of the adjacent unit modules; and
a second pressing member secured to the second flange and pressing the battery cell disposed in the other unit module of the adjacent unit modules.

9. The battery pack as claimed in claim 8, wherein the first pressing member and the second pressing member are elastically deformable.

10. The battery pack as claimed in any one of claims 4 to 9, wherein the second support member further comprises a reinforcing member reinforcing the second support body.

11. The battery pack as claimed in claim 10, wherein the reinforcing member comprises a plurality of reinforcing ribs disposed inside the second support body and spaced apart from each other in a longitudinal direction of the second support body.

12. The battery pack as claimed in any one of claims 4 to 11, further comprising:
a third support member disposed on the tray and supporting a wiring harness.

13. The battery pack as claimed in claim 12, wherein the third support member comprises:
a clip holder secured to the second support body; and
a clip supported by the clip holder and separating the wiring harness from the second support body by a predetermined distance.

14. The battery pack as claimed in any one of claims 1 to 13, further comprising:
a connection member electrically connected to the plurality of unit modules; and
a controller disposed on the tray to be connected to the connection member and controlling operation of the plurality of unit modules.

15. The battery pack as claimed in claim 14, wherein the connection member comprises:
a first busbar electrically connected to the battery cell;
a second busbar electrically connecting adjacent unit modules to each other; and
a third busbar electrically connecting the plurality of unit modules to the controller.
